# EUROPEAN PATENT APPLICATION

(11) **EP 4 813 669 A1**
(43) Date of publication of application: **30.09.2026**
(21) Application number: 24893844.1
(22) Date of filing: 12.09.2024
(51) Int. Cl.: B60C 9/20, B60C 9/00, B60C 9/18, B60C 9/22

(54) **PNEUMATIC TIRE**

(30) Priority: 20.11.2023 JP 2023196817
(71) Applicant: BRIDGESTONE CORPORATION, Chuo-ku Tokyo 104-8340 (JP)
(72) Inventor: IIDA Masaki, Tokyo 104-8340 (JP)
(74) Representative: Marks & Clerk LLP
(86) International application number: PCT/JP2024/032733
(87) International publication number: WO 2025/109849

(57) **Abstract**

A pneumatic tire in which a thickness of a first belt layer and a thickness of a second belt layer at a tire center portion are each 1.00 mm or less, b > a, a length of a first rubber portion in a direction toward the tire center portion is longer than a length of a second rubber portion in a direction toward the tire center portion, and the reinforcement cords of a belt reinforcement layer are organic fiber cords having a breaking strength of 6.5 cN/dtex or more, a breaking elongation of 10% or more, and an elastic modulus at 7% elongation of 6.0 mN/(dtex·%) or more. The belt reinforcement layer, in a tire width direction cross-sectional view, is disposed in at least a tire width direction region between an end portion on a tire center side of the first rubber portion and an end portion of the second belt layer.

## Description

### TECHNICAL FIELD

The present disclosure relates to a pneumatic tire.

### BACKGROUND

Conventionally, in order to achieve both weight reduction and belt end durability in pneumatic tires, a technique is known in which the belt gauge is made relatively thin and an inter-belt rubber is disposed at the belt end portion (for example, see Patent Literature (PTL) 1 and PTL 2).

### CITATION LIST

### Patent Literature

PTL 1: JP 2013-159250 A
PTL 2: JP 2010-163055 A

### SUMMARY

### (Technical Problem)

However, in the above-described structure, the hoop effect at the belt end portion becomes insufficient, and particularly during high-speed running, the radial growth rate at the end portion of the pneumatic tire becomes larger compared to the center portion, which may result in non-uniformity in the tire width direction.

Therefore, an object of the present disclosure is to provide a pneumatic tire that achieves both weight reduction and belt end durability, while also making the radial growth rate uniform in the tire width direction. (Solution to Problem)

The gist of the configuration of the present disclosure is as follows.
(1) A pneumatic tire comprising:
   a belt in a tread portion, the belt including a first belt layer and a second belt layer disposed on a tire radial direction outer side of the first belt layer;
   and a belt reinforcement layer in the tread portion, disposed on a tire radial direction outer side of the belt,
   wherein each of the first belt layer and the second belt layer is formed by a plurality of belt cords coated with belt rubber,
   wherein the belt reinforcement layer is formed by a plurality of reinforcement cords coated with reinforcement layer rubber,
   wherein a thickness of the first belt layer and a thickness of the second belt layer at a tire center portion are each 1.00 mm or less,
   wherein, in a tire width direction cross-sectional view, when a first virtual line is defined as straight lines connecting tire radial direction outermost points of circumscribed circles of adjacent belt cords in the first belt layer, and a second virtual line is defined as straight lines connecting tire radial direction innermost points of circumscribed circles of adjacent belt cords in the second belt layer, and when a maximum value at the tire center of a tire radial direction distance between the first virtual line and the second virtual line is defined as a, and a minimum value of a length of a line segment connecting a tire radial direction innermost point of a circumscribed circle of a belt cord located at a tire width direction outermost position in the second belt layer and the first virtual line is defined as b,
   b > a,
   wherein at an end portion of the belt, a first rubber portion is disposed between the first belt layer and the second belt layer, and a second rubber portion is disposed on a tire radial direction outer side of the second belt layer,
   wherein a length of the first rubber portion in a direction toward the tire center portion is longer than a length of the second rubber portion in a direction toward the tire center portion,
   wherein the belt reinforcement layer, in a tire width direction cross-sectional view, is disposed in at least a tire width direction region between an end portion on a tire center side of the first rubber portion and an end portion of the second belt layer,
   and wherein the reinforcement cords of the belt reinforcement layer are organic fiber cords having a breaking strength of 6.5 cN/dtex or more, a breaking elongation of 10% or more, and an elastic modulus at 7% elongation of 6.0 mN/(dtex·%) or more.

Here, the "tire center portion" refers to a portion within a distance of 1/4 of the ground contact width from the tire equatorial plane in the tire width direction. The "ground contact width" refers to the tire width direction distance between ground contact ends in a no-load state, in which the tire is mounted on an applicable rim, filled with prescribed internal pressure, and is unloaded. The "ground contact end" refers to both ends in the tire width direction of the contact patch that comes into contact with the road surface when the tire is mounted on an applicable rim, filled with prescribed internal pressure, and subjected to maximum load capability.

Unless otherwise specified, dimensions such as "thickness," "(shortest) distance," and "length" refer to dimensions in the above no-load state.

The "thickness of the first belt layer and the thickness of the second belt layer at the tire center portion" refer to the thickness measured in the tire radial direction.

Here, the above breaking strength, breaking elongation, and elastic modulus at 7% elongation are values measured at room temperature (23 °C), and the various physical properties of the organic fiber cord can be measured in accordance with JIS L 1013 "Test Methods for Chemical Fiber Filament Yarns."

The elastic modulus at 7% elongation is calculated by converting the slope (N/%) of the tangent at the point corresponding to 7% elongation on the load-elongation curve of the cord to a value per 1 dtex.

In the present specification, the "applicable rim" refers to the approved rim for the applicable size described or to be described in the future in industrial standards effective in the region where the tire is produced and used, such as the JATMA YEAR BOOK of the Japan Automobile Tyre Manufacturers Association (JATMA) in Japan, the STANDARDS MANUAL of the European Tyre and Rim Technical Organisation (ETRTO) in Europe, and the YEAR BOOK of The Tire and Rim Association, Inc. (TRA) in the United States (that is, the above "rim" includes, in addition to current sizes, sizes that may be included in the above industrial standards in the future. As an example of "sizes to be described in the future," sizes described as "FUTURE DEVELOPMENTS" in the 2013 edition of the ETRTO can be cited). However, in the case of sizes not described in the above industrial standards, it refers to a rim having a width corresponding to the bead width of the tire.

The "prescribed internal pressure" refers to the air pressure (maximum air pressure) corresponding to the maximum load capability for single tires in the applicable size and ply rating as described in the above JATMA, etc., and in the case of sizes not described in the above industrial standards, the "prescribed internal pressure" refers to the air pressure (maximum air pressure) corresponding to the maximum load capability specified for each vehicle on which the tire is mounted.

The "maximum load" refers to the load corresponding to the above maximum load capability.

### (Advantageous Effect)

According to the present disclosure, it is possible to provide a pneumatic tire that achieves both weight reduction and belt end durability, while also making the radial growth rate uniform in the tire width direction.

### BRIEF DESCRIPTION OF THE DRAWINGS

In the accompanying drawings:
FIG. 1 is a schematic cross-sectional view in the tire width direction of a pneumatic tire according to one embodiment of the present disclosure;
FIG. 2A is a schematic cross-sectional view illustrating an example of an end portion of the belt;
FIG. 2B is a schematic cross-sectional view illustrating another example of an end portion of the belt;
FIG. 3 is a schematic cross-sectional view of the belt at the tire center portion and end portion in a pneumatic tire according to one embodiment of the present disclosure;
FIG. 4 is a schematic cross-sectional view of the belt at the tire center portion in a pneumatic tire according to one embodiment of the present disclosure;
FIG. 5A is a schematic diagram illustrating a part of the manufacturing method;
FIG. 5B is a schematic cross-sectional view of an end portion of the belt in a pneumatic tire obtained according to the manufacturing method of FIG. 5A;
FIG. 6A is a schematic diagram illustrating a part of the manufacturing method of a comparative pneumatic tire;
FIG. 6B is a schematic cross-sectional view of an end portion of the belt in a pneumatic tire obtained according to the manufacturing method of FIG. 6A; and
FIG. 7 is a diagram for explaining the first virtual line and the second virtual line.

Hereinafter, embodiments of the present disclosure will be illustrated and described in detail with reference to the drawings.

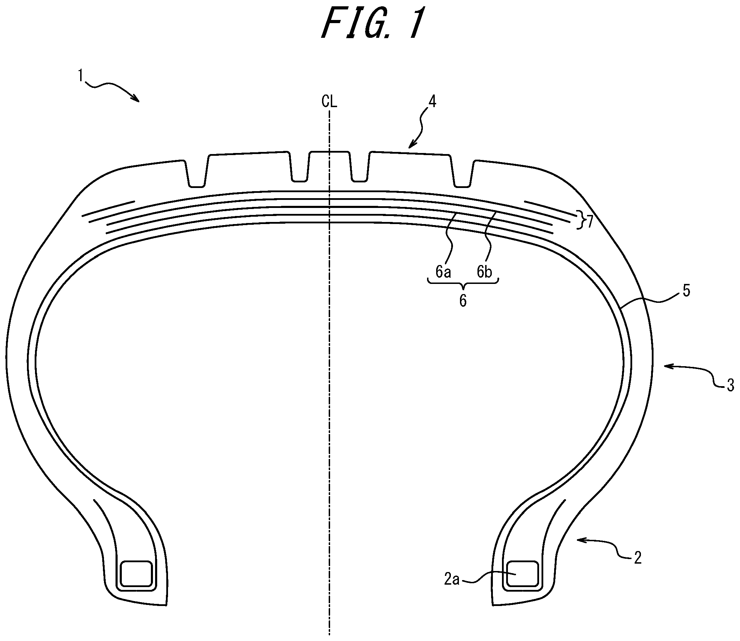

FIG. 1 is a schematic cross-sectional view in the tire width direction of a pneumatic tire according to one embodiment of the present disclosure. As illustrated in FIG. 1, the pneumatic tire 1 (hereinafter also simply referred to as "the tire") of the present embodiment includes a pair of bead portions 2, a pair of sidewall portions 3 connected to the bead portions 2, and a tread portion 4 connected between the pair of sidewall portions 3. The tire 1 further includes a carcass 5 extending toroidally between the pair of bead portions 2. The tire 1 includes, in the tread portion 4, a belt 6 comprising a first belt layer 6a and a second belt layer 6b disposed on the tire radial direction outer side of the first belt layer 6a, and a belt reinforcement layer 7 disposed on the tire radial direction outer side of the belt 6.

In each bead portion 2, a bead core 2a is embedded. Although not illustrated, a bead filler may be disposed on the tire radial direction outer side of the bead core 2a. The bead filler may, for example, have a triangular cross-sectional shape.

The carcass 5 may be formed of one or more carcass plies. As the carcass cords of the carcass ply, for example, organic fiber cords may be used.

In the illustrated example, the belt layer is composed of two layers, but it may also be composed of three or more layers. In the present embodiment, the width in the tire width direction of the first belt layer 6a is greater than the width in the tire width direction of the second belt layer 6b. Further, the belt reinforcement layer 7 may be disposed so as to cover only both end portions of the belt 6 in the tire width direction, may be disposed so as to cover the entire belt 6, or, as in FIG. 1, both a layer disposed so as to cover the entire belt 6 and a layer disposed so as to cover only both end portions of the belt 6 may be provided. The belt reinforcement layer 7 disposed so as to cover only both end portions of the belt 6 is disposed at least in a tire width direction region in which the first rubber portion 8B is disposed. The width in the tire width direction of the belt reinforcement layer 7 disposed so as to cover the entire belt 6 is greater than the width in the tire width direction of the second belt layer 6b.

In the tire 1 of the present embodiment, the thickness of the first belt layer 6a and the thickness of the second belt layer 6b at the tire center portion are each 1.00 mm or less. By setting the thickness at the tire center portion of each belt layer to 1.00 mm or less in this manner, weight reduction can be achieved and rolling resistance can be reduced. From the same viewpoint, it is preferable that the thickness of the first belt layer 6a at the tire center portion is 0.96 mm or less, and more preferably 0.90 mm or less. Further, it is preferable that the thickness of the second belt layer 6b at the tire center portion is 0.96 mm or less, and more preferably 0.90 mm or less. In order to achieve such thickness, the diameter of the belt cords embedded in the first belt layer 6a and the second belt layer 6b, and the coating thickness of the belt rubber, etc., can be appropriately selected.

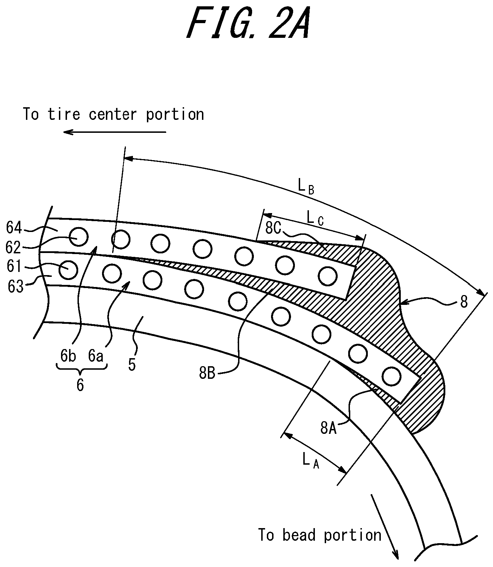

FIG. 2A is a schematic cross-sectional view illustrating an end portion of the belt. As illustrated, each of the first belt layer 6a and the second belt layer 6b is formed by a plurality of belt cords (61, 62) coated with belt rubber (63, 64). More generally, these belt layers 6a, 6b are formed of rubber-steel hybrid cords in which steel cords (belt cords 61, 62) aligned in parallel are coated with belt rubber (63, 64). The belt layers 6a, 6b may be inclined belt layers in which the belt cords intersect each other between layers. The belt cords 61, 62 may extend linearly.

As illustrated, at the end portion of the belt 6 of the tire 1 of the present embodiment, an end rubber 8 is disposed. In the illustrated example, at the end portion of the belt 6, a first rubber portion 8B is disposed between the first belt layer 6a and the second belt layer 6b, and a second rubber portion 8C is disposed on the tire radial direction outer side of the second belt layer 6b. In the illustrated example, at the end portion of the belt 6, a third rubber portion 8A is also disposed between the carcass 5 and the first belt layer 6a, but the third rubber portion 8A may be omitted. By disposing the end rubber 8 at the end portion of the belt 6 in such a manner, durability at the belt end portion can be improved. That is, the first rubber portion 8B suppresses failures due to strain between the belt layers, the second rubber portion 8C suppresses failures due to strain between the second belt layer 6b and the belt reinforcement layer 7, and the third rubber portion 8A suppresses failures due to strain between the carcass 5 and the first belt layer 6a.

Further, in the tire 1 of the present embodiment, as illustrated, the length in the direction toward the tire center portion (which is substantially synonymous with "length in the tire width direction") is longest for the first rubber portion 8B. In other words, in the tire 1 of the present embodiment, when the lengths in the direction toward the tire center portion of the third rubber portion 8A, the first rubber portion 8B, and the second rubber portion 8C are defined as L_{A}, L_{B}, and L_{C}, respectively (see FIG. 2A), L_{A}/L_{B} is less than 1.0, and L_{C}/L_{B} is less than 1.0. In addition, in the tire 1 of the present embodiment, as illustrated, among the third rubber portion 8A, the first rubber portion 8B, and the second rubber portion 8C, the first rubber portion 8B is closest to the tire center portion.

The above-described configuration of the end rubber 8 can typically be achieved by manufacturing the tire according to the method for manufacturing a pneumatic tire described later. In the method for manufacturing a pneumatic tire described later, it is difficult for gaps to be formed between the first belt layer 6a and the second belt layer 6b, and between the second belt layer 6b and the belt reinforcement layer 7; this also contributes to improving durability at the belt end portion.

In the tire 1 of the present embodiment, it is preferable that L_{A}/L_{B} is 0.5 or less, and L_{C}/L_{B} is 0.5 or less. In this case, formation of gaps at the belt end portion is further suppressed. From the same viewpoint, it is more preferable that L_{A}/L_{B} is 0.4 or less, and L_{C}/L_{B} is 0.4 or less.

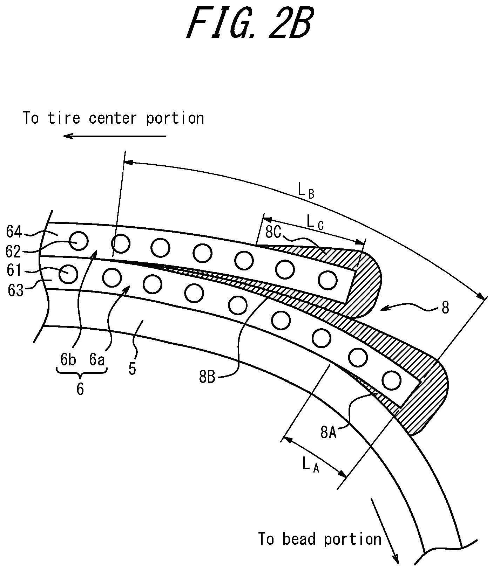

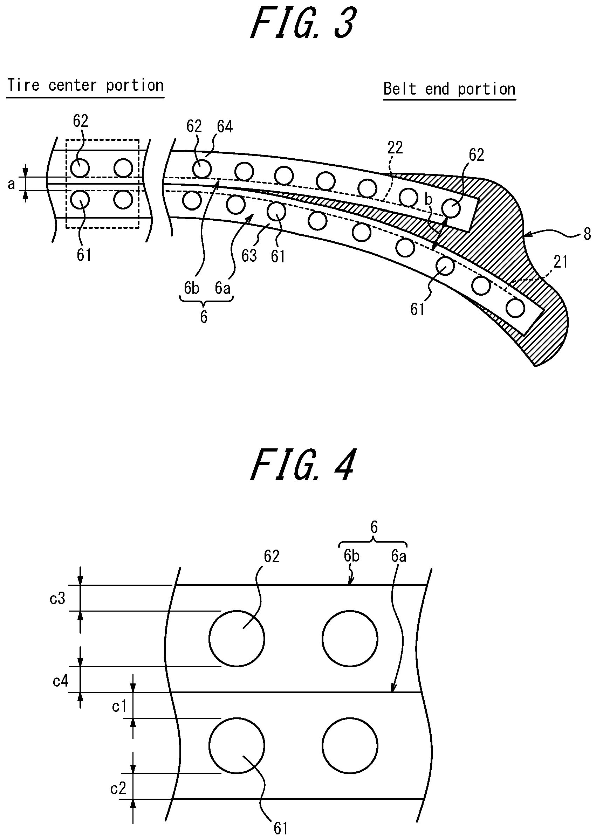

In the tire illustrated in FIG. 2A (and FIG. 1, FIG. 3), the third rubber portion 8A, the first rubber portion 8B, and the second rubber portion 8C are integrated as the end rubber 8 and disposed at the end portion of the belt 6, but such integration is not essential. For example, in the tire of the present disclosure, the rubber on the tire radial direction inner side of the first belt layer 6a (the third rubber portion 8A), the rubber between the first belt layer 6a and the second belt layer 6b (the first rubber portion 8B), and the rubber on the tire radial direction outer side of the second belt layer 6b (the second rubber portion 8C) may be disposed separately. Further, in the tire of the present disclosure, as illustrated in FIG. 2B, the end rubber 8 (rubber sheet) wrapping the end portion of the first belt layer 6a and the end rubber 8 (rubber sheet) wrapping the end portion of the second belt layer 6b may be in contact (without being completely integrated). However, from the viewpoint of further improving durability at the belt end portion, it is preferable that the third rubber portion 8A, the first rubber portion 8B, and the second rubber portion 8C are integrated as the end rubber 8.

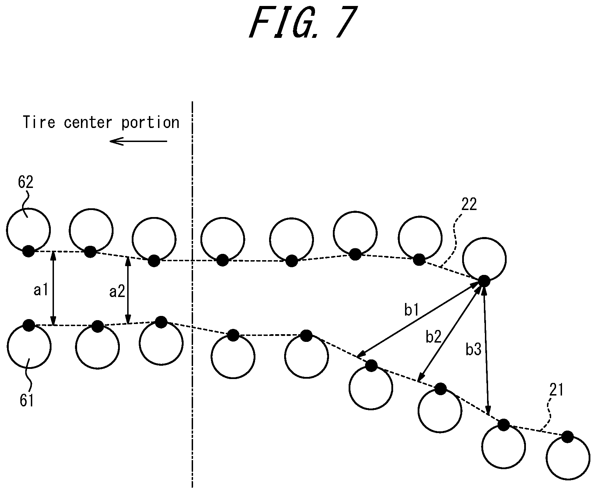

FIG. 3 is a schematic cross-sectional view of the belt 6 at the tire center portion and end portion in the tire 1 of the present embodiment. The end portion of the belt 6 in FIG. 3 corresponds to that illustrated in FIG. 2A. FIG. 7 is a diagram for explaining the first virtual line and the second virtual line. As illustrated in FIGS. 3 and 7, in a cross-sectional view in the tire width direction, a first virtual line 21 is defined as straight lines connecting the tire radial direction outermost points of circumscribed circles of adjacent belt cords 61 in the first belt layer 6a, and a second virtual line 22 is defined as straight lines connecting the tire radial direction innermost points of circumscribed circles of adjacent belt cords 62 in the second belt layer 6b. Of the tire radial direction distances between the first virtual line 21 and the second virtual line 22, the maximum value at the tire center portion is defined as a (in FIG. 7, a1 and a2 are illustrated as examples, but among the innumerable such tire radial direction distances, the maximum value), and among the lengths of line segments connecting the tire radial direction innermost point of the circumscribed circle of the belt cord 62 located at the tire width direction outermost position in the second belt layer 6b and the first virtual line 21, the minimum value is defined as b (in FIG. 7, b1, b2, and b3 are illustrated as examples, but among the innumerable such tire radial direction distances, the minimum value). In this case, in the tire 1 of the present embodiment, b > a. If b ≤ a, it is not possible to sufficiently suppress strain that causes belt edge separation. In the present embodiment, it is more preferable that the ratio b/a is 2.0 or more and 8.0 or less. By setting the ratio b/a to 2.0 or more, durability at the belt end portion, particularly belt edge separation durability, can be further improved. By setting the ratio b/a to 8.0 or less, sufficient low rolling resistance required for the tire can be ensured. Further, from the same viewpoint, it is even more preferable that the ratio b/a is 2.0 or more and 6.0 or less, and particularly preferably 4.1 or more and 6.0 or less.

FIG. 4 is a schematic cross-sectional view of the center portion of the belt 6 in the tire 1 of the present embodiment, and is the portion surrounded by a dashed line in FIG. 3. In the tire 1 of the present embodiment, the distance from the interface of the first belt layer 6a at the tire center portion to the belt cord 61 (i.e., the distance c1 from the upper surface to the belt cord 61 and the distance c2 from the lower surface to the belt cord 61) is each 0.19 mm or less, and it is preferable that the distance from the interface of the second belt layer 6b at the tire center portion to the belt cord 62 (i.e., the distance c3 from the upper surface to the belt cord 62 and the distance c4 from the lower surface to the belt cord 62) is each 0.19 mm or less. By adopting such a configuration, the low rolling resistance property of the tire 1 can be further sufficiently improved. From the same viewpoint, it is more preferable that the distance between the interface and the belt cord 61 in the first belt layer 6a at the tire center portion and the distance between the interface and the belt cord 62 in the second belt layer 6b at the tire center portion are each 0.17 mm or less, and even more preferably 0.14 mm or less.

Further, the belt reinforcement layer 7 is formed by a plurality of reinforcement cords coated with reinforcement layer rubber. In the present embodiment, the reinforcement cords of the belt reinforcement layer 7 are organic fiber cords having a breaking strength of 6.5 cN/dtex or more, a breaking elongation of 10% or more, and an elastic modulus at 7% elongation of 6.0 mN/(dtex·%) or more. If the elastic modulus at 7% elongation is less than 6.0 mN/(dtex.%), the effect of reinforcing the hoop effect of the belt cannot be sufficiently exhibited. Further, if the breaking strength is less than 6.5 cN/dtex or the breaking elongation is less than 10%, the durability of the reinforcement cords of the belt reinforcement layer 7 themselves is low, and there is a risk that the effect of reinforcing the hoop effect of the belt cannot be exhibited due to breakage of the cords or the like. In the illustrated example, the belt reinforcement layer 7 is a so-called cap layer, but it may also be a layer disposed only at the belt end.

As described above, in the tire 1 of the present embodiment, the thickness of the first belt layer and the thickness of the second belt layer at the tire center portion are each 1.00 mm or less, b > a, and the length of the first rubber portion in the direction toward the tire center portion is longer than the length of the second rubber portion in the direction toward the tire center portion, so that both weight reduction and durability at the belt end portion can be achieved. Further, since the belt reinforcement layer 7 is disposed on the tire radial direction outer side of the belt 6, and the reinforcement cords of the belt reinforcement layer 7 are organic fiber cords having a breaking strength of 6.5 cN/dtex or more, a breaking elongation of 10% or more, and an elastic modulus at 7% elongation of 6.0 mN/(dtex·%) or more, the hoop effect of the belt (particularly at the belt end portion) can be reinforced, and the difference in radial growth between the center portion and the end portion in the tire width direction can also be suppressed. In this way, according to the tire 1 of the present embodiment, both weight reduction and durability at the belt end portion can be achieved, and the radial growth rate can be made uniform in the tire width direction. Furthermore, plunger durability and steering stability can also be improved.

The tire of the present disclosure is not particularly limited in specific tire structure or material, as long as the configuration around the belt 6 and the belt reinforcement layer 7 is as described above. For example, in the first belt layer 6a and the second belt layer 6b, a plurality of belt cords embedded in belt rubber may be disposed at an angle of, for example, 15° to 40° with respect to the tire circumferential direction. Further, in the carcass 5, organic fiber cords extending in a direction substantially perpendicular to the tire circumferential direction, for example, at an angle of 70° to 90°, may be used. Further, in the illustrated tire 1, the carcass 5 may have not only a structure folded around the bead core 2a as illustrated, but also a structure wound and locked around the bead core 2a (not illustrated), or a structure locked by being sandwiched from both sides by bead wires (not illustrated). Further, in the tire of the present disclosure, a tread pattern may be formed on the surface of the tread portion 4. Further, in the tire of the present disclosure, an inner liner (not illustrated) may be formed as the innermost layer. As the gas to be filled in the tire of the present disclosure, ordinary air, air with a changed oxygen partial pressure, or an inert gas such as nitrogen may be used. The tire of the present disclosure is suitably used as a passenger vehicle pneumatic tire.

Next, details of each member used in the tire 1 of the present embodiment will be described. Note that the compounds described in the present specification may be partially or entirely derived from fossil resources, may be derived from biological resources such as plant resources, or may be derived from recycled resources such as used tires. They may also be derived from a mixture of any two or more of fossil resources, biological resources, and recycled resources.

### (Coating Rubber (Belt Rubber))

The belt rubber 63, 64 used in the first belt layer 6a and the second belt layer 6b is not particularly limited as long as it is a general rubber composition capable of coating the belt cords 61, 62. As the rubber component, diene rubber is exemplified, and particularly natural rubber or isoprene rubber is preferable. Further, the belt rubber 63, 64 may contain a filler such as carbon black, as long as it does not affect properties such as adhesiveness and durability as coating rubber. As the carbon black, HAF class carbon black is preferable, and the content of carbon black in the belt rubber 63, 64 may be 50 to 70 parts by mass per 100 parts by mass of the rubber component. Further, the belt rubber 63, 64 may appropriately contain, in addition to the above components, for example, crosslinking agents such as vulcanization accelerators, sulfur, and zinc oxide; adhesion promoters such as cobalt compounds containing cobalt salts; age resistors; oil; resin; and the like. As the age resistor, amine-based age resistors such as 6PPD, bisphenol-based age resistors such as o-MBp14, and the like can be mentioned, and these age resistors may be used alone or in combination of two or more.

The natural rubber used in the belt rubber may be modified. In the case of modified natural rubber, for example, it is preferable that the nitrogen content is 0.1% to 0.3% by mass. Further, it is preferable that the modified natural rubber is one from which protein has been removed by a centrifugal separation process, enzyme treatment, or urea treatment. Further, it is preferable that the phosphorus content of the modified natural rubber is more than 200 ppm and 900 ppm or less. The carbon black used in the belt rubber may be recycled carbon black.

### (End Rubber)

The end rubber 8 (third rubber portion 8A, first rubber portion 8B, second rubber portion 8C) is not particularly limited, but, for example, the same rubber composition as the belt rubber 63, 64 of the first belt layer 6a and the second belt layer 6b may be used.

### (Belt Cord)

In the first belt layer 6a and the second belt layer 6b, typically, a plurality of belt cords 61 and 62 are arranged in parallel. Such belt cords 61 and 62 are generally steel cords. Further, there is no particular limitation on the structure of such belt cords. However, from the viewpoint of effectively achieving both improved tire durability and low rolling resistance, it is preferable that the belt cords have a 1×N structure formed by twisting N filaments (where N is an integer selected from 2 to 6). In particular, in tires with a tire load index of less than 100, it is more preferable that the above cords have a 1×2 structure, and in tires with a tire load index of 100 or more, it is more preferable that the above cords have a 1×5 structure. Also, from a similar viewpoint, it is preferable that the cords are monofilaments arranged in parallel without being twisted together. In the case of the above 1×N structure, the cords may also have a 1×N open structure in which the filaments are twisted together with intervals provided between them so that the filaments do not contact each other. Compared to cords in which the filaments are twisted together in contact with each other, open structure cords exhibit superior fatigue resistance. The 1×N open structure cords may be formed by inserting unvulcanized rubber between the filaments and twisting them together, or by coating the surface of the filaments with unvulcanized rubber and then twisting them together. Further, such filaments may be pre-shaped before twisting. When pre-shaping is performed, it is preferable that the shaping pitch of the filaments is in the range of 8 mm or more and 16 mm or less. If the shaping pitch is within this range, rubber permeability is enhanced, and durability can be further improved. In addition, the ratio Sf/Sc of the filament cross-sectional area Sf to the area Sc of the circumscribed circle of the cord cross-section is preferably in the range of 0.4 or more and 0.7 or less. If Sf/Sc is within this range, rubber permeability is enhanced, and durability can be further improved. The filaments constituting the belt cords 61 and 62 may have undergone surface treatment on their surfaces during wire drawing. In such cases, it is preferable that the amount of phosphoric acid on the surface of the filaments after surface treatment is 2.0 mg/m² or less. If the amount of phosphoric acid on the surface of the filaments is 2.0 mg/m² or less, the adhesiveness between the filaments and the coating rubber becomes favorable.

The filaments constituting the belt cords 61 and 62 used in the first belt layer 6a and the second belt layer 6b are preferably classified as ST grade (super tensile strength cord) or UT grade (ultra tensile strength cord) as defined in ISO 17832:2009, and particularly preferably classified as UT grade. In this case, both improved tire durability and low rolling resistance can be effectively achieved. From a similar viewpoint, it is preferable that the belt cords 61 and 62 satisfy the following formula (1) when the diameter of the filaments constituting the belt cords is X (mm) and the tensile strength of the filaments is Y (MPa): $4000 - 2000 X \leq Y \leq 4500 - 2000 X$

With respect to the filaments constituting the above belt cords 61 and 62, from the viewpoint of fatigue resistance, it is preferable that the hardness of the surface layer is 90% to 110% relative to the hardness of the inner layer, and more preferably 100%. Here, the surface layer of the filament refers to the layer (region) up to a depth of 0.01 mm from the outermost surface of the filament, and the inner layer of the filament refers to the layer (region) inside the above surface layer. The above hardness can be measured, for example, as Vickers hardness. The hardness of the surface layer of the filament can be measured at a depth position of 0.005 mm from the outermost surface of the filament, and the hardness of the inner layer of the filament can be measured in a region deeper than 0.04 mm from the outermost surface of the filament. The manufacturing method of the filaments constituting the above belt cords 61 and 62 is not particularly limited. The above filaments may be obtained, for example, by refining and drawing iron ore, by refining and drawing scrap iron, or by recycling steel taken from tires.

In the first belt layer 6a and the second belt layer 6b, it is preferable that the cord density of the belt cords 61 and 62 is 50 cords/dm or more and 250 cords/dm or less. In this case, both improved tire durability and low rolling resistance can be effectively achieved. In particular, when the above belt cords have a 1×N structure (where N is an integer selected from 2 to 6), it is preferable that the cord density of the belt cords is 60 cords/dm or more and 95 cords/dm or less. On the other hand, when the above cords are monofilaments, it is preferable that the cord density of the cords is 180 cords/dm or more and 240 cords/dm or less.

The diameter of the belt cords 61 and 62 used in the first belt layer 6a and the second belt layer 6b is preferably 0.2 mm or more and 1.2 mm or less. In this case, both improved tire durability and low rolling resistance can be effectively achieved. In particular, when the above belt cords have a 1×N structure (where N is an integer selected from 2 to 6), it is preferable that the diameter of the cords is 0.4 mm or more and 1.2 mm or less, and more preferably 0.5 mm or more and 1.0 mm or less. On the other hand, when the above belt cords are monofilaments, it is preferable that the diameter of the belt cords is 0.24 mm or more and 0.28 mm or less.

### (Belt Reinforcement Layer)

As described above, the tire 1 of the present disclosure is provided with a belt reinforcement layer 7 on the tire radial direction outer side of the belt 6. The belt reinforcement layer 7 is a member formed by coating reinforcement cords (organic fiber cords) arranged substantially parallel to the tire circumferential direction (for example, at an angle of 0° to 5° with respect to the tire circumferential direction) with reinforcement layer rubber (elastomer). The belt reinforcement layer 7 may be formed by continuously spirally winding, in the tire circumferential direction, a narrow strip prepared by coating organic fiber cords with an elastomer.

The organic fiber cords applicable to the belt reinforcement layer are organic fiber cords having a breaking strength of 6.5 cN/dtex or more, a breaking elongation of 10% or more, and an elastic modulus at 7% elongation of 6.0 mN/(dtex·%) or more.

Organic fiber cords having a breaking strength of 6.5 cN/dtex or more, a breaking elongation of 10% or more, and an elastic modulus at 7% elongation of 6.0 mN/(dtex·%) or more have high strength at break, large elongation at break, and high elastic modulus at 7% elongation. By applying such organic fiber cords to the belt reinforcement layer 7 to supplement the rigidity of the belt 6, for example, it is possible to suppress a decrease in plunger durability due to the application of a belt layer containing metal monofilaments, while improving the steering stability of the tire.

The material of the organic fiber cords is not particularly limited, and examples include polyester such as polyethylene terephthalate (PET) and polyethylene naphthalate (PEN); nylon such as 6-nylon, 6,6-nylon, 4,6-nylon, and 4,10-nylon; and cellulose such as rayon and lyocell. Among these, polyethylene terephthalate is preferable, that is, the organic fiber cords as the reinforcing member of the belt reinforcement layer are preferably cords made of polyethylene terephthalate (hereinafter, sometimes simply referred to as "polyethylene terephthalate cords"). Polyethylene terephthalate cords have higher rigidity than commonly used nylon cords and the like, and are excellent in improving tire plunger durability and steering stability.

It is preferable that the organic fiber cords have an elastic modulus at a load of 29.4 N measured at 160°C of 2.5 mN/(dtex·%) or more. Here, the elastic modulus at a load of 29.4 N measured at 160°C is calculated by converting the slope (N/%) of the tangent at the point corresponding to a load of 29.4 N on the load-elongation curve of the cord measured at 160 °C to a value per 1 dtex. The reason for measuring the elastic modulus at 160 °C is that the temperature inside the tire rises as the vehicle travels at high speed, and at the point when tire failure occurs during high-speed travel, the temperature of the belt reinforcement layer reaches 160 °C. In particular, polyethylene terephthalate cords exhibit a large decrease in elastic modulus at high temperatures compared to room temperature, and even if the cords have high elasticity at room temperature, if they cannot maintain a high elastic modulus at high temperatures, sufficient reinforcing effect of the belt (improvement in durability against protrusion input and suppression of belt protrusion) cannot be exhibited, so the elastic modulus at high temperatures is of important significance. By setting the elastic modulus of the cord at a load of 29.4 N measured at 160 °C to 2.5 mN/(dtex·%) or more, it is possible to improve the plunger durability of the tire, suppress the amount of belt protrusion during high-speed travel, reduce the stress during tire compression and decompression, and improve the steering stability of the tire during high-speed travel.

In order to improve the elastic modulus of the organic fiber cords at 160°C, it is preferable to perform dip treatment under high tension. Further, in order to sufficiently increase the elasticity of the cords, it is preferable that the tension applied during the adhesive treatment of the cords is 6.9×10⁻² N/tex or more. However, the method for increasing the elasticity of the cords is not limited to this, and other methods such as reducing the twist of the cords may also be adopted. The adhesive treatment consists of dry treatment, hot treatment, normalize treatment, etc., and is performed by appropriately adjusting the temperature and time in addition to the tension. The adhesive treatment may be performed by either a single-bath or two-bath process, but it is preferable to perform a two-bath process, and it is preferable to apply a tension of 6.9×10⁻² N/tex or more to the cords during the hot treatment of the two-bath process.

The organic fiber cords preferably have a twist coefficient α represented by the following formula: $α = T \times {D}^{1 / 2}$ [In the formula, α is the twist coefficient, T is the number of twists (turns/100 mm), and D is the total denier of the cord (dtex)], and the twist coefficient α is preferably 500 to 2500. When the twist coefficient α of the organic fiber cords is 500 or more, the binding force of the filaments becomes strong, adhesion becomes sufficient, and when it is 2500 or less, a sufficient elastic modulus can be exhibited to obtain the effect of improving durability against protrusion input and suppressing belt protrusion.

Further, it is preferable that the organic fiber cords have a total denier of 1000 dtex to 3500 dtex. When the total denier of the cords is 1000 dtex or more, a sufficient elastic modulus can be exhibited to obtain the effect of improving durability against protrusion input and suppressing belt protrusion, and when it is 3500 dtex or less, the cords can be densely arranged, and sufficient rigidity per unit width can be ensured. The raw material of the above organic fiber cords is not particularly limited, and may be of synthetic origin, biological origin, mechanically recycled by crushing, melting, and re-spinning PET products such as PET bottles, or chemically recycled by depolymerizing and repolymerizing PET products such as PET bottles.

### (Coating Rubber (Reinforcement Layer Rubber))

It is preferable that the reinforcement layer rubber has a storage modulus E' of 6.0 MPa or less as measured under conditions of temperature 24 °C, amplitude ±1%, and frequency 52 Hz.

Further, the value L of the loss index of the coating rubber contained per 100 mm unit width of the belt reinforcement layer, defined by $L = tanδ \times \left(\left(100\times D\right)-π{\left(D/2\right)}^{2}\times N\right) ,$ (where tanδ is the value of the loss tangent of the reinforcement layer rubber measured under conditions of temperature 24°C, initial strain 6%, amplitude ±1%, and frequency 52 Hz, D is the diameter (mm) of the circumscribed circle of the reinforcement cord, and N is the number of reinforcement cords embedded in the belt reinforcement layer (cords/100 mm)),
is preferably 4.00 or less.

Further, it is preferable that the rubber composition used for the reinforcement layer rubber contains natural rubber and styrene-butadiene rubber as rubber components, and contains 70 parts by mass or more of natural rubber per 100 parts by mass of the rubber component. It is also preferable that the styrene-butadiene rubber used in the rubber composition for the reinforcement layer rubber is non-oil extended. Further, it is preferable that the rubber composition used for the reinforcement layer rubber contains 30 to 60 parts by mass of carbon black per 100 parts by mass of the rubber component, and that the nitrogen adsorption specific surface area (N2SA) of the carbon black is 40 m²/g or less. It is also preferable that the rubber composition used for the reinforcement layer rubber does not contain oil derived from polymers. Further, it is preferable that the oil content in the rubber composition used for the reinforcement layer rubber is 0.2 mass% or less. The natural rubber used for the reinforcement layer rubber may be modified. In the case of modified natural rubber, for example, it is preferable that the nitrogen content is 0.1 mass% to 0.3 mass%. Further, it is preferable that the modified natural rubber is one from which protein has been removed by a centrifugal separation process, enzyme treatment, or urea treatment. It is also preferable that the phosphorus content of the modified natural rubber is more than 200 ppm and 900 ppm or less. The carbon black used for the reinforcement layer rubber may be recycled carbon black.

In this specification, "recycled carbon black" refers to carbon black obtained by recovering it from waste materials subjected to recycling. Examples of such waste materials subjected to recycling include rubber products containing carbon black (particularly vulcanized rubber products), such as used rubber and used tires, and waste oil. "Recycled carbon black" is different from carbon black produced directly from hydrocarbons such as petroleum or natural gas, that is, carbon black that is not a recycled product. Note that "used" here includes not only items that have actually been used and then discarded, but also items that were manufactured but discarded without actually being used.

Further, the recycled carbon black used in the present embodiment is preferably obtained by pyrolysis of vulcanized rubber products containing carbon black. In this case, it is possible to achieve resource circulation and further contribute to improved sustainability. Furthermore, the recycled carbon black used in the present embodiment is preferably obtained from the solid residue generated by pyrolysis of vulcanized rubber products containing carbon black. When rubber products containing carbon black are pyrolyzed, solid residue and volatile components (oil) are obtained, and recycled carbon black can be recovered from either. However, it is preferable that the recycled carbon black used in the present embodiment does not include carbon black recovered from oil.

The solid residue obtained by pyrolyzing waste such as used rubber and used tires contains, in addition to carbon black, ash. The ash is derived from non-volatile components contained in rubber or tires. Therefore, recycled carbon black obtained from such solid residue has a relatively low carbon black content. On the other hand, considering the various physical properties required for tires manufactured using recycled carbon black, it is preferable that the carbon content in the recycled carbon black is as high as possible. In the recycled carbon black used in the present embodiment, the carbon content is preferably 80 mass% or more, more preferably 85 mass% or more, even more preferably 87 mass% or more, and still more preferably 89 mass% or more. The carbon content in the recycled carbon black used in the present embodiment is preferably 97 mass% or less. Note that the above carbon content is a value excluding adsorbed moisture.

Specifically, the ash includes zinc oxide, zinc sulfide, silica, iron compounds (iron oxide), calcium oxide, aluminum oxide, magnesium oxide, and the like. In the case of recycled carbon black produced from solid residue obtained by pyrolyzing waste, various processes for removing ash may be performed, but a certain amount of ash remains. In the present embodiment, the inclusion of ash in the recycled carbon black is permitted. The lower limit of the ash content in the recycled carbon black used in the present embodiment may be 0.5 mass%. On the other hand, considering the various physical properties required for tires, the quality of the recycled carbon black, and so on, it is preferable that the ash content in the recycled carbon black is 20 mass% or less, more preferably 15 mass% or less, and still more preferably 5.0 mass% or less. If the ash content in the recycled carbon black is 20 mass% or less, the various physical properties of rubber products to which the rubber composition is applied can be improved. Here, in this specification, the ash content of carbon black is calculated from the mass of the non-combustible component (ash) after ashing by burning the carbon black at 550 °C ± 25 °C.

Further, recycled carbon black can be obtained from the pyrolysis process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550 °C to 800 °C in the absence of oxygen, or by vacuum pyrolysis at a relatively low temperature ([0027]). The carbon black obtained from such a pyrolysis process generally lacks functional groups on its surface, as mentioned in [0004] of Japanese Patent No. 6856781 ("Comparison of Surface Morphology and Chemistry of Pyrolytic Carbon Black and Commercial Carbon Black," Powder Technology 160 (2005) 190-193).

The reclaimed carbon black may be one that lacks functional groups on its surface, or may be one that has been treated to include functional groups on its surface. The treatment to include functional groups on the surface of the reclaimed carbon black can be carried out by conventional methods. For example, in European Patent Application Publication No. 3173251, carbon black obtained from a pyrolysis process is treated with potassium permanganate under acidic conditions to obtain carbon black containing hydroxyl and/or carboxyl groups on its surface. Further, in Japanese Patent No. 6856781, carbon black obtained from a pyrolysis process is treated with an amino acid compound containing at least one thiol group or disulfide group to obtain carbon black whose surface is activated. The reclaimed carbon black according to the present embodiment also includes carbon black that has been treated to include such functional groups on its surface.

### (Adhesive)

It is preferable that the reinforcing cords (organic fiber cords) of the belt reinforcement layer 7 and the reinforcement layer rubber are bonded with an adhesive. From the viewpoint of environmental protection, it is preferable to use a dip treatment solution that does not contain resorcinol or formalin as the adhesive composition for the organic fiber cords. As such a dip treatment solution, for example, a composition containing a rubber latex (a) having an unsaturated diene, and at least one compound (b) selected from compounds having a skeleton structure composed of polyether and containing an amine functional group, compounds having an acrylamide structure, polypeptides, polylysine, and carbodiimide, can be mentioned. Further, as such a dip treatment solution, for example, in addition to the above rubber latex (a) having an unsaturated diene and the compound (b), a composition containing at least one selected from an aqueous compound (c) having a (thermally dissociable blocked) isocyanate group, polyphenol (d), and polyvalent metal salt (e) can be mentioned.

In addition, as a dip treatment solution that does not contain resorcinol or formalin, a composition containing polyphenols (I) and aldehydes (II) can also be mentioned. Further, such a composition may further contain at least one of an isocyanate compound (III) and a rubber latex (IV) in addition to the polyphenols (I) and aldehydes (II).

By including polyphenols (I) and aldehydes (II) in the adhesive composition for treating (coating) the organic fiber cords, even when resorcinol is not used in consideration of environmental impact, favorable adhesiveness can be exhibited.

### [Polyphenols (I)]

By including polyphenols (I) as a resin component in the adhesive composition, the adhesiveness to the organic fiber cords can be enhanced. Here, the polyphenols (I) are typically water-soluble polyphenols, and as long as they are polyphenols other than resorcinol (resorcinol), they are not particularly limited. In the polyphenols (I), the number of aromatic rings or the number of hydroxyl groups can be appropriately selected.

From the viewpoint of achieving even better adhesiveness, it is preferable that the polyphenols (I) have two or more hydroxyl groups, and more preferably three or more hydroxyl groups. When the polyphenols have three or more hydroxyl groups, the polyphenol or a condensate thereof dissolves in water in the adhesive composition (dip treatment solution) containing water. As a result, the polyphenols can be uniformly distributed within the adhesive composition, thereby achieving even better adhesiveness. Furthermore, when the polyphenols (I) are polyphenols containing a plurality (two or more) of aromatic rings, in each of those aromatic rings, two or three hydroxyl groups are present at ortho, meta, or para positions.

As the polyphenols (I), for example, those described as polyphenol compounds in WO2022/130879 can be used. These polyphenols (I) may be used alone or in combination of two or more.

### [Aldehydes (II)]

By including aldehydes (II) as a resin component in the adhesive composition in addition to the above-described polyphenols (I), high adhesiveness can be achieved together with the above-described polyphenols (I). Here, the aldehydes (II) are not particularly limited and can be appropriately selected according to the required performance. Note that, in the present specification, the aldehydes (II) also include derivatives of aldehydes whose source is an aldehyde.

As the aldehydes (II), for example, monoaldehydes such as formaldehyde, acetaldehyde, butylaldehyde, acrolein, propionaldehyde, chloral, butylaldehyde, caproaldehyde, allylaldehyde, or aliphatic dialdehydes such as glyoxal, malonaldehyde, succinaldehyde, glutaraldehyde, adipaldehyde, aromatic ring-containing aldehydes, dialdehyde starch, and the like can be mentioned. These aldehydes (II) may be used alone or in combination of two or more.

It is preferable that the aldehydes (II) are, or include, aromatic ring-containing aldehydes. This is because even better adhesiveness can be obtained. Further, it is preferable that the aldehydes (II) do not contain formaldehyde. Here, "do not contain formaldehyde" means, for example, that the content of formaldehyde is less than 0.5 mass% of the total mass of the aldehydes.

In the adhesive composition, the polyphenols (I) and aldehydes (II) are in a condensed state, and it is preferable that the mass ratio (content of aromatic ring-containing aldehydes/content of polyphenols) of the polyphenols to the aromatic ring-containing aldehydes is 0.1 or more and 3 or less. In this case, the hardness and adhesiveness of the resin, which is a product of the condensation reaction between the polyphenols and the aromatic ring-containing aldehydes, become more suitable. From the same viewpoint, it is more preferable that the mass ratio (content of aromatic ring-containing aldehydes/content of polyphenols) of the polyphenols to the aromatic ring-containing aldehydes in the adhesive composition is 0.25 or more and more preferably 2.5 or less.

Note that the above mass ratio is based on the mass of the dried material (solid content ratio).

Further, it is preferable that the total content of the polyphenols (I) and aldehydes (II) in the adhesive composition is 3 mass% to 30 mass%. In this case, even better adhesiveness can be ensured without deteriorating operability and the like. From the same viewpoint, it is more preferable that the total content of the polyphenols (I) and aldehydes (II) in the adhesive composition is 5 mass% or more and more preferably 25 mass% or less.

Note that the above total content is based on the mass of the dried material (solid content ratio).

### [Isocyanate Compounds (III)]

It is preferable that the adhesive composition further contains an isocyanate compound (III) in addition to the above-described polyphenols (I) and aldehydes (II). In this case, due to the synergistic effect with the polyphenols (I) and aldehydes (II), the adhesiveness of the adhesive composition can be further enhanced.

Here, the isocyanate compound (III) is a compound that promotes adhesion to the resin material (for example, a phenol/aldehyde resin obtained by condensing polyphenols (I) and aldehydes (II)), which is the adherend of the adhesive composition, and is a compound having an isocyanate group as a polar functional group. These isocyanate compounds (III) may be used alone or in combination of two or more.

The isocyanate compounds (III) are not particularly limited, but from the viewpoint of further improving adhesiveness, it is preferable to include (blocked) isocyanate group-containing aromatic compounds. By including (blocked) isocyanate group-containing aromatic compounds in the adhesive composition, the (blocked) isocyanate group-containing aromatic compounds are distributed near the interface between the organic fiber cords and the adhesive composition, resulting in a further adhesion-promoting effect, and due to this effect, the adhesiveness of the adhesive composition to the organic fiber cords can be further enhanced.

As the (blocked) isocyanate group-containing aromatic compounds, those described in Japanese Patent Application No. 2023-040157 and those described in Japanese Patent Application No. 2023-030762 can be used.

The content of the isocyanate compound (III) in the adhesive composition is not particularly limited, but from the viewpoint of more reliably ensuring excellent adhesiveness, it is preferably 5 mass% to 65 mass%. From the same viewpoint, it is more preferable that the content of the isocyanate compound (III) in the adhesive composition is 10 mass% or more and more preferably 45 mass% or less.

Note that the above content is based on the mass of the dried material (solid content ratio).

### [Rubber Latex (IV)]

The adhesive composition can further substantially contain rubber latex (IV) in addition to the above-described polyphenols (I), aldehydes (II), and isocyanate compounds (III). Thereby, the adhesiveness of the adhesive composition to the rubber member can be further enhanced.

Here, the rubber latex (IV) is not particularly limited, and examples include, in addition to natural rubber (NR), synthetic rubbers such as polyisoprene rubber (IR), styrene-butadiene copolymer rubber (SBR), polybutadiene rubber (BR), ethylene propylene diene rubber (EPDM), chloroprene rubber (CR), halogenated butyl rubber, acrylonitrile-butadiene rubber (NBR), or vinylpyridine-styrene-butadiene copolymer rubber (Vp). These rubber latexes (IV) may be used alone or in combination of two or more.

When preparing an adhesive composition containing the rubber latex (IV), it is preferable to mix the rubber latex (IV) with the phenols (I) and aldehydes (II) before adding the isocyanate compound (III).

The content of the rubber latex (IV) in the adhesive composition is preferably 20 mass% or more, more preferably 25 mass% or more, and preferably 70 mass% or less, more preferably 60 mass% or less.

The method for producing the adhesive composition is not particularly limited, but for example, a method of mixing and aging raw materials such as polyphenols (I), aldehydes (II), and rubber latex (IV), or a method of mixing and aging polyphenols (I) and aldehydes (II), and then further adding and aging rubber latex (IV), and the like can be mentioned. When the raw materials include an isocyanate compound (III), the method may be such that rubber latex (IV) is added and aged, and then the isocyanate compound (III) is added.

### (Method for Manufacturing Pneumatic Tire)

The method for manufacturing the tire (hereinafter, sometimes simply referred to as the "manufacturing method") is a method for manufacturing the pneumatic tire 1 of the present invention described above, and includes a step (laminating step) of laminating the above-described first belt layer 6a and the above-described second belt layer 6b. Further, in the manufacturing method of the present embodiment, prior to the laminating step, the end portion of the first belt layer 6a is wrapped with a first rubber sheet, and the end portion of the second belt layer 6b is wrapped with a second rubber sheet, and at that time, for both the first rubber sheet and the second rubber sheet, the length of the rubber sheet portion located on the side facing the other belt layer when laminated is made longer than the length of the rubber sheet portion located on the opposite side, so that the end portions of each belt layer are wrapped in a staggered manner. According to such a manufacturing method, while effectively suppressing the formation of gaps between the first belt layer 6a and the second belt layer 6b, and between the second belt layer 6b and the belt reinforcement layer 7, the pneumatic tire 1 described above can be manufactured.

The mechanism by which the formation of gaps is suppressed as described above in the present embodiment will be described in detail below.

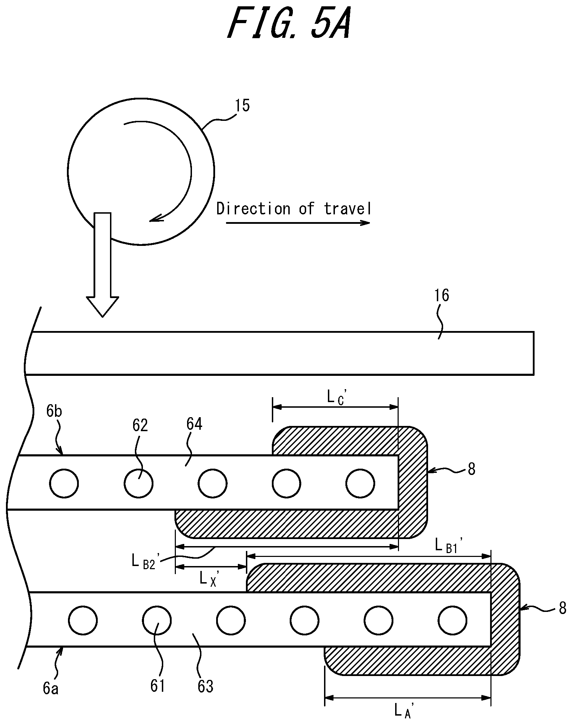

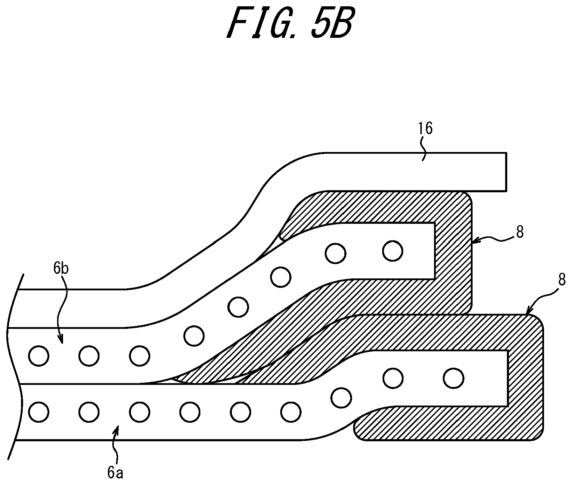

FIG. 5A is a schematic diagram illustrating the laminating step in the manufacturing method of the present embodiment. As depicted, in the laminating step, for example, the first belt layer 6a, the second belt layer 6b, and other layers 16 (including the belt reinforcement layer 7, and other rubber layers, adhesion layers, etc. (not illustrated)) are laminated in this order, and while pressing a roll 15 from above, the roll is moved from the tire center portion toward the end portions of each layer, thereby bonding the first belt layer 6a, the second belt layer 6b, and the other layers 16. At this time, in advance, the end portion of the first belt layer 6a is wrapped with the first rubber sheet, and the end portion of the second belt layer 6b is wrapped with the second rubber sheet. At this time, as illustrated in FIG. 5A, the first rubber sheet wrapping the end portion of the first belt layer 6a is arranged so that the length (length in the tire width direction, the same applies hereinafter) (L_{B1'}) of the rubber sheet portion located on the side facing the second belt layer 6b when the layers are laminated is longer than the length (L_{A'}) of the rubber sheet portion located on the opposite side, thereby wrapping the end portion of the first belt layer 6a in a staggered manner. Similarly, as illustrated in FIG. 5A, the second rubber sheet wrapping the end portion of the second belt layer 6b is arranged so that the length (L_{B2'}) of the rubber sheet portion located on the side facing the first belt layer 6a when the layers are laminated is longer than the length (L_{C'}) of the rubber sheet portion located on the opposite side, thereby wrapping the end portion of the second belt layer 6b in a staggered manner. If lamination and bonding are performed with such an arrangement of the rubber sheets, as schematically depicted in FIG. 5B, it becomes difficult for gaps to form between the first belt layer 6a and the second belt layer 6b, and between the second belt layer 6b and the other layers 16 at the belt end portions.

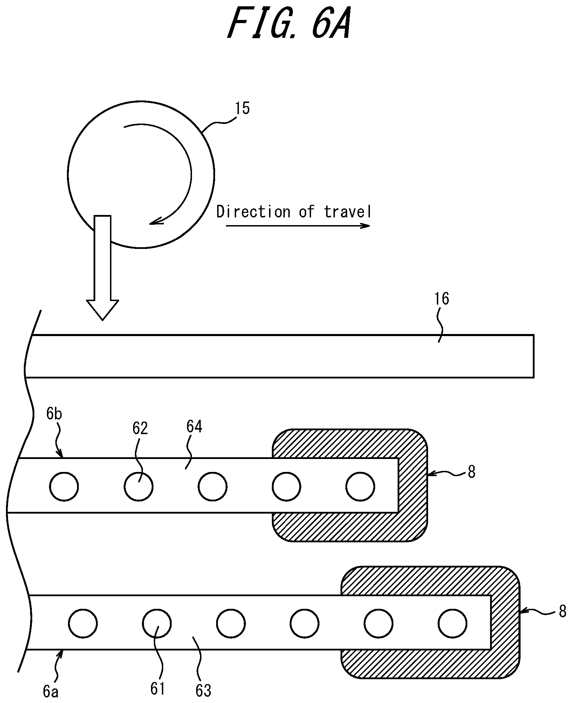

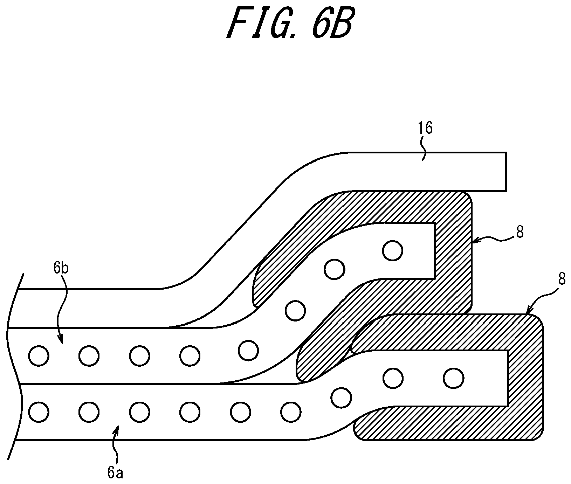

On the other hand, conventionally, as illustrated in FIG. 6A, both the first rubber sheet wrapping the end portion of the first belt layer 6a and the second rubber sheet wrapping the end portion of the second belt layer 6b were wrapped symmetrically about the end portion (that is, L_{A'} ≈ L_{B1'}, L_{B2'} ≈ L_{C'}). When lamination and bonding are performed with such an arrangement of the rubber sheets, the first belt layer 6a, the second belt layer 6b, and the other layers 16 cannot deform until they are in close contact with each other, and as a result, as illustrated in FIG. 6B, large gaps (air pockets) are likely to form between the first belt layer 6a and the second belt layer 6b, and between the second belt layer 6b and the other layers 16 at the belt end portions.

The above-mentioned other layers 16 may, for example, include the belt reinforcement layer, and may further be tire constituent members such as rubber layers.

The above-mentioned first rubber sheet and second rubber sheet may, for example, be rectangular rubber sheets.

In the above laminating step, it is preferable to laminate the first belt layer 6a and the second belt layer 6b so that the first rubber sheet and the second rubber sheet are in contact with each other.

In the manufacturing method of the present embodiment, when the first belt layer 6a and the second belt layer 6b are laminated, it is preferable that the ends of the first rubber sheet and the second rubber sheet located between the first belt layer 6a and the second belt layer 6b do not overlap. In other words, it is preferable that the distance L_{x'} (distance in the tire width direction) (see FIG. 5A) between the ends of the first rubber sheet and the second rubber sheet located between the first belt layer 6a and the second belt layer 6b is greater than 0. This further suppresses the formation of gaps at the belt end portions. In this case, the end of the first rubber sheet of the first belt layer 6a may be closer to the tire center portion, or as illustrated in FIG. 5A, the end of the second rubber sheet of the second belt layer 6b may be closer to the tire center portion. However, from the viewpoint of more effectively suppressing gap formation, it is more preferable that, as illustrated in FIG. 5A, the end of the second rubber sheet of the second belt layer 6b is closer to the tire center portion.

In this manufacturing method, as long as the arrangement of the rubber sheets around the first belt layer 6a and the second belt layer 6b is as described above, and the configuration of the pneumatic tire 1 of the present embodiment is obtained, other specific manufacturing conditions are not particularly limited. For example, the lengths (L_{A}, L_{B}, and L_{C}) and the relative positional relationships of the third rubber portion 8A, the first rubber portion 8B, and the second rubber portion 8C in the tire 1 after lamination correspond to the lengths (L_{A'}, L_{B1'} to L_{B2'}, L_{C'}) of the respective rubber sheet portions in this manufacturing method, so those skilled in the art can appropriately adjust them with this in mind. Further, for example, in order to adjust the spacing between the belt cords of the first belt layer 6a and the second belt layer 6b in the tire 1 of the present embodiment (and consequently, to make b > a), the thickness of the first rubber sheet wrapping the end portion of the first belt layer 6a and/or the thickness of the second rubber sheet wrapping the end portion of the second belt layer 6b can be appropriately adjusted.

### EXAMPLES

Hereinafter, the tire of the present invention will be described in more detail using examples.

Using tires having the belt structures indicated in Tables 1 to 3 below and having the schematic structure of the belt end portion illustrated in FIG. 2A, evaluations of belt edge separation durability and rolling resistance were conducted. The sizes of the tires used in the tests are indicated in Tables 1 to 3, and the cords in each belt layer of each tire were arranged so as to intersect at an angle of ±30° with respect to the tire circumferential direction. Further, in Tables 1 to 3, the cord density, cord diameter, filament diameter, thicknesses of the first belt layer and the second belt layer at the tire center portion, and the distance between the interface of the first belt layer and the second belt layer and the cords at the tire center portion are values specified at the time of tire design. The value denoted as a indicates twice the distance between the interface of the belt layer and the cords at the tire center portion. The value denoted as b indicates the value actually measured by dissecting the manufactured tire.

### (Belt Edge Separation Durability)

After deterioration, each example tire was inflated and mounted on a test passenger vehicle, and then run on a BES drum while repeatedly applying a constant side force (SF). Afterward, the tire was dissected and the length of cracks generated at the belt layer end portion was measured. For the crack length of each example, comparison was made with the crack length of the conventional example; if the difference in crack length from the conventional example was less than 0.5 mm, it was evaluated as equivalent to the conventional example, and if the crack length was 0.5 mm or more shorter than that of the conventional example, it was evaluated as favorable. The results are presented in Tables 1 to 3.

**[Table 1]**

| | | | Conventional Example 1 | Invention Example 1 | Invention Example 2 |
|---|---|---|---|---|---|
| Test Tire Size | | | 265/65R18 | 265/65R18 | 265/65R18 |
| | Cord Structure | | 1×5 (Open Structure) | 1×5 (Open Structure) | 1×5 (Open Structure) |
| | Cord Density [cords/dm] | | 75 | 75 | 75 |
| | Cord Diameter [mm] | | 0.62 | 0.62 | 0.62 |
| | Filament Diameter [mm] | | 0.225 | 0.225 | 0.225 |
| Belt | Thickness of First Belt Layer and Second Belt Layer at Tire Center Portion [mm] | | 1.15 | 0.86 | 0.86 |
| | Distance Between Interface of First Belt Layer and Second Belt Layer and Cord at Tire Center Portion (c1, c2, c3, c4) [mm] | | 0.26 | 0.12 | 0.12 |
| | a | | 0.52 | 0.24 | 0.24 |
| | b | | 0.50 | 0.41 | 0.83 |
| | b/a | | 0.96 | 1.71 | 3.46 |
| Belt Edge Separation Durability | | First Belt Layer End Separation Evaluation | Reference | Favorable | Favorable |
| | | Second Belt Layer End Separation Evaluation | Reference | Equivalent | Favorable |

**[Table 2]**

| | | | Conventional Example 2 | Invention Example 3 |
|---|---|---|---|---|
| Test Tire Size | | | 245/45R18 | 245/45R18 |
| | Cord Structure | | 1×5 (Open Structure) | 1×5 (Open Structure) |
| | Cord Density [cords/dm] | | 75 | 75 |
| | Cord Diameter [mm] | | 0.62 | 0.62 |
| | Filament Diameter [mm] | | 0.225 | 0.225 |
| Belt | Thickness of First Belt Layer and Second Belt Layer at Tire Center Portion [mm] | | 1.15 | 0.86 |
| | Distance Between Interface of First Belt Layer and Second Belt Layer and Cord at Tire Center Portion (c1, c2, c3, c4) [mm] | | 0.26 | 0.12 |
| | a | | 0.52 | 0.24 |
| | b | | 1.07 | 1.24 |
| | b/a | | 2.06 | 5.17 |
| Belt Edge Separation Durability | | First Belt Layer End Separation Evaluation | Reference | Favorable |
| | | Second Belt Layer End Separation Evaluation | | |

| | | | | |
|---|---|---|---|---|
| *In Conventional Example 2 and Invention Example 3, no cracks occurred at the second belt end. | | | | |

**[Table 3]**

| | | | Conventional Example 3 | Invention Example 4 |
|---|---|---|---|---|
| Test Tire Size | | | 215/60R16 | 215/60R16 |
| | Cord Structure | | 2+3 | 1×2 |
| | Cord Density [cords/dm] | | 76 | 80 |
| | Cord Diameter [mm] | | - | 0.60 |
| | Filament Diameter [mm] | | - | 0.30 |
| Belt | Thickness of First Belt Layer and Second Belt Layer at Tire Center Portion [mm] | | 1.02 | 0.84 |
| | Distance Between Interface of First Belt Layer and Second Belt Layer and Cord at Tire Center Portion (c1, c2, c3, c4) [mm] | | 0.24 | 0.12 |
| | a | | 0.48 | 0.24 |
| | b | | 0.96 | 0.98 |
| | b/a | | 2.00 | 4.08 |
| Belt Edge Separation Durability | | First Belt Layer End Separation Evaluation | Reference | Equivalent |
| | | Second Belt Layer End Separation Evaluation | Reference | Equivalent |

| | | | | |
|---|---|---|---|---|
| *For the cord structure "2+3", the circumscribed circle is elliptical and two types of filaments are twisted together, so the cord diameter and filament diameter are not indicated. | | | | |

### (Effect of Belt Reinforcement Layer)

In the tires of Invention Examples 1 to 4 indicated in Tables 1 to 3, by disposing a belt reinforcement layer on the tire radial direction outer side of the belt, the belt reinforcement layer being formed by coating with an elastomer a cord made of polyethylene terephthalate having a breaking strength of 6.5 cN/dtex or more, a breaking elongation of 10% or more, and an elastic modulus at 7% elongation of 6.0 mN/(dtex·%) or more, it is possible to make the radial growth rate uniform in the tire width direction, and it was further confirmed that the plunger durability and steering stability of the tire are improved.

### (Effect of Inter-Belt Layer Rubber)

In the tires of Invention Examples 1 to 4 indicated in Tables 1 to 3, by disposing a belt reinforcement layer on the tire radial direction outer side of the belt, the belt reinforcement layer being formed by coating with an elastomer a cord made of polyethylene terephthalate having a breaking strength of 6.5 cN/dtex or more, a breaking elongation of 10% or more, and an elastic modulus at 7% elongation of 6.0 mN/(dtex·%) or more, and further, by disposing inter-belt layer rubber at the belt end portion (between the end portion of the first belt layer and the end portion of the second belt layer) so that b > a, it was confirmed that strain at the belt end is suppressed and the durability of the belt end portion of the tire is improved.

### [Contribution to the Sustainable Development Goals (SDGs) Led by the United Nations]

SDGs have been advocated toward the realization of a sustainable society. One embodiment of the present disclosure can be a technology that contributes to, for example, "No. 7 Affordable and Clean Energy," "No. 12 Responsible Consumption and Production," and "No. 13 Climate Action."

### REFERENCE SIGNS LIST

1: pneumatic tire,
2: bead portion,
3: sidewall portion,
4: tread portion,
5: carcass,
6: belt,
7: belt reinforcement layer,
8: end portion rubber,
15: roll,
16: other layer

## Claims

1. A pneumatic tire comprising:
a belt in a tread portion, the belt including a first belt layer and a second belt layer disposed on a tire radial direction outer side of the first belt layer;
and a belt reinforcement layer in the tread portion, disposed on a tire radial direction outer side of the belt,
wherein each of the first belt layer and the second belt layer is formed by a plurality of belt cords coated with belt rubber,
wherein the belt reinforcement layer is formed by a plurality of reinforcement cords coated with reinforcement layer rubber,
wherein a thickness of the first belt layer and a thickness of the second belt layer at a tire center portion are each 1.00 mm or less,
wherein, in a tire width direction cross-sectional view, when a first virtual line is defined as straight lines connecting tire radial direction outermost points of circumscribed circles of adjacent belt cords in the first belt layer, and a second virtual line is defined as straight lines connecting tire radial direction innermost points of circumscribed circles of adjacent belt cords in the second belt layer, and when a maximum value at the tire center of a tire radial direction distance between the first virtual line and the second virtual line is defined as a, and a minimum value of a length of a line segment connecting a tire radial direction innermost point of a circumscribed circle of a belt cord located at a tire width direction outermost position in the second belt layer and the first virtual line is defined as b,
b > a,
wherein at an end portion of the belt, a first rubber portion is disposed between the first belt layer and the second belt layer, and a second rubber portion is disposed on a tire radial direction outer side of the second belt layer,
wherein a length of the first rubber portion in a direction toward the tire center portion is longer than a length of the second rubber portion in a direction toward the tire center portion,
wherein the belt reinforcement layer, in a tire width direction cross-sectional view, is disposed in at least a tire width direction region between an end portion on a tire center side of the first rubber portion and an end portion of the second belt layer,
and wherein the reinforcement cords of the belt reinforcement layer are organic fiber cords having a breaking strength of 6.5 cN/dtex or more, a breaking elongation of 10% or more, and an elastic modulus at 7% elongation of 6.0 mN/(dtex·%) or more.

2. The pneumatic tire according to claim 1, wherein the belt reinforcement layer, in a tire width direction cross-sectional view, is disposed over at least a tire width direction region in which the second belt layer is disposed.

3. The pneumatic tire according to claim 1 or 2, wherein, in the tire center portion, a distance between an interface of the first belt layer and the second belt layer and the belt cords is 0.19 mm or less for each of the first belt layer and the second belt layer.

4. The pneumatic tire according to any one of claims 1 to 3, wherein each of the belt cords has a 1×N structure formed by twisting N filaments, and N is an integer selected from 2 to 6.

5. The pneumatic tire according to any one of claims 1 to 4, wherein the cord density of the belt cords is 60 cords/dm or more and 95 cords/dm or less.

6. The pneumatic tire according to any one of claims 1 to 5, wherein a diameter of each of the belt cords is 0.5 mm or more and 1.0 mm or less.

7. The pneumatic tire according to any one of claims 1 to 6, wherein a ratio b/a is 2.0 or more and 8.0 or less.

8. The pneumatic tire according to any one of claims 1 to 7, wherein the organic fiber cords as the reinforcement cords are cords made of polyethylene terephthalate.
